# EUROPÄISCHE PATENTSCHRIFT

(11) **EP 3 293 315 B1**
(45) Veröffentlichungstag und Bekanntmachung des Hinweises auf die Patenterteilung: **26.02.2025**
(21) Anmeldenummer: 17189780.4
(22) Anmeldetag: 07.09.2017
(51) Int. Cl.: E03B 9/02, G08B 25/08, G08C 25/00, H04Q 9/00, A62C 37/00, A62C 35/20, A62C 37/50, G08B 21/18

(54) **VORRICHTUNG ZUM ÜBERWACHEN EINES HYDRANTEN**
DEVICE FOR MONITORING A HYDRANT
DISPOSITIF DE SURVEILLANCE D'UNE BOUCHE D'INCENDIE

(30) Priorität: 09.09.2016 AT 507992016
(43) Veröffentlichungstag der Anmeldung: 14.03.2018
(73) Patentinhaber: Hawle Service GmbH, 2544 Leobersdorf (AT)
(72) Erfinder: Venhoda, Thomas, 2544 Leobersdorf (AT)
(74) Vertreter: Maier, Martin

(56) Entgegenhaltungen:
- WO-A1-2011/159403
- WO-A1-2013/025526
- US-B1- 8 805 633

## Beschreibung

Die Erfindung betrifft eine Vorrichtung zum Überwachen eines Hydranten und ein Verfahren zum Herstellen einer derartigen Vorrichtung. Die Erfindung betrifft ferner ein Verfahren zum Überwachen eines Hydranten.

Überwachungsvorrichtungen für Hydranten sind bekannt.

Zum Beispiel offenbart EP 2 749 860 A1 eine derartige Überwachungsvorrichtung mit einer Signaleinheit mit einer Detektoreinheit zur Zustandserfassung in einem Wasserleitungsnetz und/oder am Hydranten mit einer Batterie, einer Sendeantenne und einer extern an einem Aufsatzrohr des Hydranten angeordneten Antenne.

WO 2007/012631 A1 offenbart eine Überwachungsanordnung für einen Hydranten mit einem Alarmelement, einem elektronischen Signalgeber mit einer Sendeantenne und einem Sendemodul, einer Stromquelle und einem Auslöseelement, wobei alle genannten Elemente in einem Schutzdeckel angeordnet sind. Das Alarmelement ist derart ausgebildet und angeordnet, dass es beim Öffnen der Schutzabdeckung von einem Auslöseelement getrennt wird. Zudem ist ein Schalter (z.B. Reed-Schalter, Näherungssensor, Kontaktmesser) zum Feststellen der genannten Trennung und zur darauffolgenden Herstellung einer elektrischen Verbindung zwischen der Stromquelle und dem Alarmelement ausgebildet. Der Signalgeber ist zum Abgeben eines Signals befähigt, welches ein Öffnen der Schutzabdeckung der Entnahmestelle anzeigt.

US 7 980 317 B1 offenbart einen sogenannten "Smart Monitor" für einen Hydranten. Vorgeschlagen wird eine elektronische Überwachungsvorrichtung, die verschiedene Überwachungsmaßnahmen für den Hydranten übernimmt. Offenbart ist eine Überwachungsvorrichtung, die in einem Monitormodul auf einer Abdeckkappe eines Hydranten angeordnet ist und verschiedene Überwachungsaufgaben übernimmt. Dabei kann eine Datenübertragung mittels eines RF-Transceivers zum Übertragen der Daten via GSM vorgesehen sein. Eine elektronische Überwachungseinheit ist in einem Modul auf einer Abdeckkappe des Hydranten angeordnet, wobei eine Aktivierung des Hydranten durch Verdrehen einer Betriebsmutter detektiert wird. Eine Hydrantengruppe kann auf diese Weise per Web-Browser beobachtet werden.

WO 2012/079498 A1 offenbart eine Überwachungsvorrichtung zum Detektieren eines Wasserdiebstahls aus einem Hydranten. Die Überwachungsvorrichtung weist folgende Elemente auf: Elektronikeinheit, Antenne und Batterie, die allesamt unter einer Abdeckkappe des Hydranten angeordnet sind. Die Elektronikeinheit umfasst einen Hall-Sensor, der eine örtliche Verlagerung eines Magneten auf einem Schaft in Relation zum Hall-Sensor detektiert.

US 8 614 745 B1 offenbart ein Überwachungssystem für einen Hydranten, der eine betrügerische Manipulation am Hydranten detektieren kann. Offenbart ist eine Vorrichtung auf einem Kragen des Hydranten, der in vier separate Quadranten unterteilt ist. Die vier Quadranten sind an einem oberen Bereich eines Hydrantenkörpers unterhalb eines oberen Flansches des Hydrantenkörpers angeordnet. In jedem der Quadranten ist jeweils eine Fernsehkamera installiert, wobei jede Fernsehkamera nach außen gerichtet ist und ein Sichtfeld von mindestens 90 Grad aufweist.

WO 2011/159403 A1 offenbart Infrastrukturüberwachungseinrichtungen mit umfangreichen Sensorkonzepten, die eine betrügerische Manipulation von Wasserverteilungs-Infrastruktur (z.B. eines Hydranten) erkennbar machen sollen.

Es ist eine Aufgabe der Erfindung, eine verbesserte Vorrichtung zum Überwachen eines Hydranten bereitzustellen.

Gemäß einem ersten Aspekt wird die Aufgabe gelöst mit einer Vorrichtung zum Überwachen eines Hydranten, aufweisend:
- eine Detektionseinrichtung zum Detektieren einer Inbetriebnahme des Hydranten; und
- eine Signalisierungseinrichtung, mittels der die Inbetriebnahme des Hydranten drahtlos signalisierbar ist, wobei die Detektionseinrichtung und die Signalisierungseinrichtung in einem Abschlusselement des Hydranten anordenbar oder angeordnet sind, wobei mittels des Abschlusselements eine genormte Abgangskupplung des Hydranten verschließbar ist, dadurch gekennzeichnet, dass die Detektionseinrichtung zwei technisch unterschiedliche Sensoren aufweist, wobei mit wenigstens einem der Sensoren eine Inbetriebnahme des Hydranten (300) detektierbar ist, wobei ein erster Sensor als ein Lagesensor zum Erfassen einer definierten Verdrehung des Abschlusselements und wobei ein zweiter Sensor als ein Wassersensor zum Erfassen von Wasser innerhalb des Hydranten ausgebildet ist, wobei der zweite Sensor als ein kapazitiver Sensor ausgebildet ist, der eine Annäherung von Wasser an eine Elektrode des zweiten Sensors auf kapazitive Weise erfasst, wobei erkannt wird, ob ein von der Elektrode des zweiten Sensors beabstandetes Deckelelement mit Luft oder wenigstens teilweise mit Wasser kontaktiert.

Auf diese Weise kann eine effiziente Überwachung des Hydranten zusammen bei einer hohen Systemkompatibilität mit bestehenden Hydrantensystemen erreicht werden. Bestehende Hydranten können auf einfache Weise mit geringem Nachrüstaufwand mit der Vorrichtung nachgerüstet werden, wobei beispielsweise eine Einbindung in ein web-basiertes Überwachungsnetzwerk vorgenommen werden kann. Aufgrund der Tatsache, dass die Vorrichtung jegliche Inbetriebnahme des Hydranten detektiert, kann eine hohe Zuverlässigkeit eines Betriebs des Hydranten erreicht werden.

Gemäß einem zweiten Aspekt wird die Aufgabe gelöst mit einem Verfahren zum Herstellen einer Vorrichtung zum Überwachen eines Hydranten, aufweisend die Schritte:
- Bereitstellen einer Detektionseinrichtung zum Detektieren einer Inbetriebnahme des Hydranten; und
- Bereitstellen einer Signalisierungseinrichtung, wobei die Detektionseinrichtung und die Signalisierungseinrichtung derart ausgebildet werden, dass sie in einem Abschlusselement zum Verschließen einer genormten Abgangskupplung des Hydranten anordenbar oder angeordnet sind,wobei für die Detektionseinrichtung zwei technisch unterschiedliche Sensoren bereitgestellt werden, wobei mit wenigstens einem der Sensoren eine Inbetriebnahme des Hydranten detektierbar ist, wobei ein erster Sensor als ein Lagesensor zum Erfassen einer definierten Verdrehung des Abschlusselements und wobei ein zweiter Sensor als ein Wassersensor zum Erfassen innerhalb des Hydranten bereitgestellt wird, wobei der zweite Sensor als ein kapazitiver Sensor bereitgestellt wird, der eine Annäherung von Wasser an eine Elektrode des zweiten Sensors auf kapazitive Weise erfasst, wobei erkannt wird, ob ein von der Elektrode des zweiten Sensors beabstandetes Deckelelement mit Luft oder wenigstens teilweise mit Wasser kontaktiert.

Gemäß einem dritten Aspekt wird die Aufgabe gelöst mit einem Verfahren zum Überwachen eines Hydranten, aufweisend die Schritte:
- Detektieren einer Inbetriebnahme des Hydranten mittels einer Detektionseinrichtung, die in einem Abschlusselement zum Verschließen einer genormten Abgangskupplung des Hydranten angeordnet ist;
- wobei zum Detektieren zwei technisch unterschiedliche Sensoren verwendet werden, wobei mit wenigstens einem der Sensoren eine Inbetriebnahme des Hydranten detektierbar ist, wobei ein erster Sensor als ein Lagesensor zum Erfassen einer definierten Verdrehung des Abschlusselements und wobei ein zweiter Sensor als ein Wassersensor zum Erfassen innerhalb des Hydranten ausgebildet ist, wobei der zweite Sensor als ein kapazitiver Sensor ausgebildet ist, der eine Annäherung von Wasser an eine Elektrode des zweiten Sensors auf kapazitive Weise erfasst, wobei erkannt wird, ob ein von der Elektrode des zweiten Sensors beabstandetes Deckelelement mit Luft oder wenigstens teilweise mit Wasser kontaktiert; und
- Drahtloses Signalisieren der Inbetriebnahme des Hydranten mittels einer im Abschlusselement des Hydranten angeordneten Signalisierungseinrichtung.

Vorteilhafte Weiterbildungen der Vorrichtung sind Gegenstand von jeweils abhängigen Ansprüchen.

Eine vorteilhafte Weiterbildung der Vorrichtung zeichnet sich dadurch aus, dass die Detektionseinrichtung und die Signalisierungseinrichtung in einem genormten Abschlusselement des Hydranten anordenbar oder angeordnet sind.

Dadurch ist vorteilhaft ermöglicht, dass die Vorrichtung für sämtliche Hydranten vorgesehen werden kann. Dadurch sind einzelne Hydranten oder auch ganze Hydrantenparks auf einfache Weise mit der erfindungsgemäßen Überwachungsvorrichtung aus- bzw. nachrüstbar.

Eine vorteilhafte Weiterbildung der Vorrichtung zeichnet sich dadurch aus, dass die Detektionseinrichtung und die Signalisierungseinrichtung in einem genormten Abschlusselement mit B-Durchmesser des Hydranten anordenbar oder angeordnet sind.

Auf diese Weise lässt sich jeder gängige Hydrantentyp mit der vorgeschlagenen Vorrichtung nachrüsten, da jeder derartige Hydrant in der Regel ein genormtes Abschlusselement mit B-Durchmesser aufweist. Eine kosten- und zeitsparende Nachrüstung von vollständigen, bestehenden Hydrantenparks ist auf diese Weise vorteilhaft unterstützt.

Ein weiterer Vorteil des Wassersensors besteht darin, dass mit dem Wassersensor zuverlässig geprüft werden kann, ob sich die Hydrantensäule des geschlossenen Hydranten ordnungsgemäß entleert hat und sich der Hydrant dadurch in einem frostsicheren Zustand befindet.

Eine weitere vorteilhafte Weiterbildung der Vorrichtung zeichnet sich dadurch aus, dass die Signalisierungseinrichtung ein Funkmodul aufweist, mit dem eine funkbasierte Nachricht an eine Verwaltungsvorrichtung absetzbar ist.

Beispielsweise kann eine Nachricht an eine Datenbank übermittelt werden, wobei optional auch Parameter des Hydranten gespeichert werden können. Die Nachricht kann z.B. in Form einer SMS, E-Mail, Datenpaket, usw. abgesetzt werden, wodurch ein zeitnahes Reagieren auf eine Inbetriebnahme des Hydranten möglich ist.

Eine weitere vorteilhafte Weiterbildung der Vorrichtung zeichnet sich dadurch aus, dass für das Übertragen der funkbasierten Nachricht ein GSM-Netz und/oder ein UMTS-Netz verwendbar ist.

Auf diese Weise kann die Nachricht auch in Mobilfunknetzen verschiedener Generationen übertragen werden. Vorteilhaft können auf diese Weise bestehende Mobilfunknetz zur Datenübertragung verwendet werden und es sind somit keine proprietären separaten Empfangs- und Sendestationen erforderlich.

Eine weitere vorteilhafte Weiterbildung der Vorrichtung sieht vor, dass automatisch auf mehrere GSM-Funknetze zugegriffen wird (nationales Roaming) . Dadurch wird eine zuverlässige Übertragung der funkbasierten Nachrichten erreicht.

Eine weitere vorteilhafte Weiterbildung der Vorrichtung sieht vor, dass die Signalisierungseinrichtung eine Antenne aufweist.

Mittels der Antenne kann eine effiziente Kommunikationscharakteristik der Signalisierungseinrichtung bereitgestellt werden.

Eine weitere vorteilhafte Weiterbildung der Vorrichtung sieht vor, dass die Antenne als eine Helix-Antenne ausgebildet ist.

Auf diese Weise wird ein einfach zu realisierendes Antennenkonzept bereitgestellt, welches kostengünstig zu realisieren ist und gute Abstrahleigenschaften aufweist.

Eine weitere vorteilhafte Weiterbildung der Vorrichtung sieht vor, dass die Helix-Antenne multibandfähig ausgebildet ist.

Auf diese Weise wird die oben genannte Fähigkeit der Vorrichtung zum Agieren in unterschiedlichen Mobilfunknetzen bereitgestellt.

Weitere bevorzugte Weiterbildungen der Vorrichtung zeichnen sich dadurch aus, dass die Antenne als eine Stabantenne oder als eine PCB-Antenne oder als eine planare Antenne ausgebildet ist.

Dadurch werden mehrere alternative und unterschiedliche Antennenkonzepte für die Vorrichtung bereitgestellt. Dadurch kann jeweils eine bestmögliche Antenne realisiert werden, die an unterschiedliche Empfangs-, Sende- und Systembedingungen angepasst ist.

Eine weitere vorteilhafte Weiterbildung der Vorrichtung zeichnet sich dadurch aus, dass die planare Antenne als ein in einem Kunststoffteil des Abschlusselements angeordnetes metallisches Element ausgebildet ist.

Auf diese Weise kann auf vorteilhafte Weise das Abschlusselement wenigstens teilweise auch als Antenne genutzt werden.

Eine weitere vorteilhafte Weiterbildung der Vorrichtung sieht vor, dass die Vorrichtung eine Ortungseinrichtung aufweist.

Dadurch kann vorteilhaft eine Position der Vorrichtung erfasst werden, wodurch Wartungs- und/oder Installationsarbeiten am Hydranten vereinfacht sind.

Die Erfindung wird im Folgenden mit weiteren Merkmalen und Vorteilen anhand von mehreren Figuren im Detail beschrieben. Gleiche bzw. funktionsgleiche Elemente haben gleiche Bezugszeichen. Die Figuren sind insbesondere zur prinzipiellen Erläuterung der Erfindung vorgesehen und sind nicht unbedingt maßstabsgetreu ausgeführt. Zum Zwecke einer besseren Übersichtlichkeit kann vorgesehen sein, dass nicht in sämtlichen Figuren für sämtliche Elemente stets sämtliche Bezugszeichen eingezeichnet sind. Für die Erfindung unwesentliche Elemente werden nicht näher erläutert.

Die erfindungsgemäße Vorrichtung umfasst die Vorrichtung sowohl in einem im Abschlusselement nicht angeordneten Zustand ("anbringbarer Zustand") als auch in einem im Abschlusselement angeordneten Zustand ("bestimmungsgemäße Anbringlage") .

Offenbarte Vorrichtungsmerkmale ergeben sich analog aus entsprechenden Verfahrensmerkmalen und umgekehrt. Dies bedeutet, dass sich Merkmale, technische Vorteile und Ausführungen betreffend die Vorrichtung zum Überwachen eines Hydranten in analoger Weise aus entsprechenden Merkmalen, technischen Vorteilen und Ausführungen betreffend das Verfahren zum Herstellen einer Vorrichtung zum Überwachen eines Hydranten und entsprechenden Merkmalen, technischen Vorteilen und Ausführungen betreffend das Verfahren zum Überwachen eines Hydranten ergeben und umgekehrt.

Die nachfolgend verwendete Formulierung "bzw." umfasst insbesondere auch die Formulierung "und/oder".

In den Figuren zeigt:
- Fig. 1 und 2: Schnittansichten einer Deckkapsel eines Hydranten mit einer Ausführungsform der erfindungsgemäßen Vorrichtung;
- Fig. 3 und 4: perspektivische Schnittansichten der Anordnung von Fig. 1;
- Fig. 5: eine Explosionsdarstellung der Anordnung von Fig. 1;
- Fig. 6: einen Überflurhydranten mit genormter Festkupplung und einer darauf angeordneten Abdecckapsel mit der erfindungsgemäßen Vorrichtung;
- Fig. 7 bis 10: prinzipielle Darstellungen von unterschiedlichen Antennenkonzepten für die erfindungsgemäße Vorrichtung; und
- Fig. 11: einen prinzipiellen Ablauf einer Ausführungsform eines Verfahrens zum Herstellen einer Vorrichtung zum Überwachen eines Hydranten.

### Beschreibung von Ausführungsformen

Eine unbefugte Inbetriebnahme von Hydranten stellt Wasserversorger zunehmend vor große Herausforderungen. Einerseits wird dadurch eine Wasserbilanz verfälscht, die eine Ermittlung von Verlusten erschwert, andererseits führt eine unsachgemäße Bedienung der Hydranten oftmals zu Folgeschäden, die schwerer wiegen als der Diebstahl des Wassers an sich. Zu beachten ist auch eine hygienische Gefährdung von Trinkwasserleitungen, wenn Baumaschinen ohne Sicherungsarmatur direkt am Hydranten angeschlossen werden.

Bekannt sind zahlreiche passive Sicherungselemente für Hydranten, zum Beispiel in Form von Plomben oder Sicherheitskappen, welche nicht mit einem genormten Bedienschlüssel betätigt werden können. Nachteilig verhindert eine Plombe keine Inbetriebnahme des Hydranten und Spezialschlüssel können auf einfache Weise nachgebaut werden.

Ein Kerngedanke der Erfindung besteht darin, eine elektronische Vorrichtung zu schaffen, die es auf einfache Weise ermöglicht, ein Öffnen bzw. eine Inbetriebnahme eines Hydranten zu erkennen und drahtlos an eine übergeordnete Einheit zu signalisieren.

In weiterer Folge meint der Begriff "Hydrant" vollständige Überflurhydranten für die Brandbekämpfung gemäß ÖNORM EN 14384 samt zugehörigen nationalen Festlegungen gemäß ÖNORM F 2010 und vollständige Unterflurhydranten für die Brandbekämpfung gemäß ÖNORM EN 14339 sowie alle entsprechenden Normierungs-Regelwerke anderer Länder (z.B. DIN 3222 Teil 1, usw.). Unter dem Begriff "genormte Abgangskupplung" wird in weiterer Folge sowohl eine "genormte Festkupplung" eines Überflurhydranten als auch eine "genormte Klauenkupplung" eines Unterflurhydranten verstanden.

Unter einem genormten Abschlusselement werden in weiterer Folge insbesondere eine B-Deckkapsel aus Grauguß oder AluminiumLegierung gemäß DIN 14318 oder eine Blindkupplung gemäß DIN 14312 verstanden.

Gegenüber bekannten Systemen hat die vorgeschlagene Vorrichtung den Vorteil, dass die Vorrichtung in ein Abschlusselement des Hydranten, vorzugsweise in ein genormtes Abschlusselement des Hydranten integrierbar ist, das zum Verschließen einer genormten Abgangskupplung des Hydranten vorgesehen ist und damit die Möglichkeit bietet, bestehende Systeme mit der Vorrichtung einfach und kostengünstig aus- und/oder nachzurüsten. Gesamte Hydrantenparks sind auf diese Weise kostengünstig mit der Vorrichtung aus- bzw. nachrüstbar, vorteilhaft können Betreiber von Hydranten (z.B. kommunale Wasserwerke) dadurch erheblichen Aufwand und Kosten sparen.

Im Ergebnis ist es mit der Vorrichtung vorteilhaft möglich, sowohl eine berechtigte Inbetriebnahme des Hydranten als auch eine unberechtigte Inbetriebnahme des Hydranten zu detektieren und drahtlos an eine übergeordnete Einheit (z.B. ein kommunales Wasserwerk) zu signalisieren. Nach Erkennen einer Inbetriebnahme des Hydranten können geeignete Maßnahmen getroffen werden, z.B. der Täter überführt, ein ordnungsgemäßes Schließen des Hydranten überprüft werden, usw.

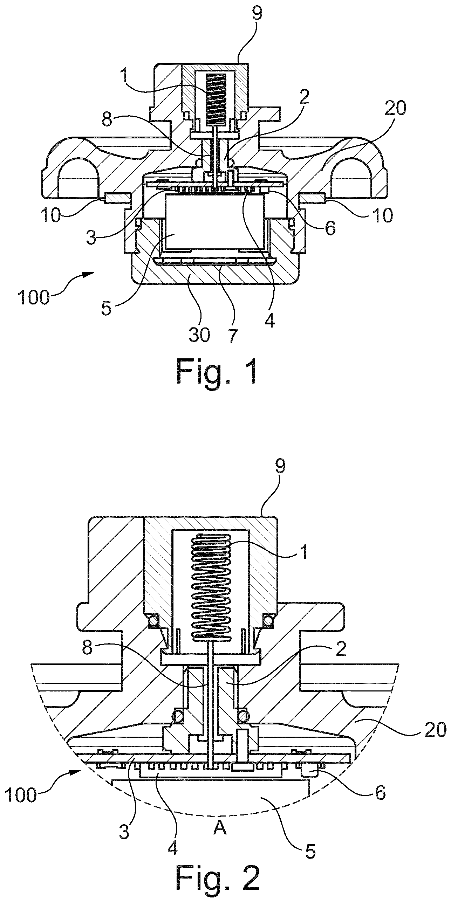

Fig. 1 zeigt im Prinzip eine Schnittansicht einer Ausführungsform der vorgeschlagenen Vorrichtung 100, die in einem Abschlusselement 20, vorzugsweise in einem genormten Abschlusselement 20 zum Verschließen einer genormten Festkupplung eines Überflurhydranten angeordnet ist. Man erkennt eine Signalisierungseinrichtung, vorzugsweise in Form eines Mobilfunk-Moduls 4 (z.B. eines GSM-Modul, UMTS-Modul, LTE-Modul, usw.), das von einer Energieversorgungseinrichtung 5, vorzugsweise einer Batterie (z.B. Li-Zelle) mit elektrischer Energie versorgt wird. Die Signalisierungseinrichtung ist funktional mit einer Antenne 1 verbunden, mittels der bei Inbetriebnahme des Hydranten ein funkbasiertes Signal gesendet wird, z.B. in Form einer SMS, E-Mail, Nachricht per App, Datenpaket, usw.

Vorgesehen sind ferner zwei technologisch unterschiedlich ausgestaltete Sensoren 6, 7, die jeweils auf unterschiedliche Ereignisse im Zusammenhang mit der Inbetriebnahme des Hydranten ansprechen und daraufhin die Absetzung des funkbasierten Signals initiieren.

Der erste Sensor 6 ist als ein Lage- bzw. Neigungssensor ausgebildet. Der erste Sensor 6 ist vorgesehen, eine definierte Bewegung bzw. eine Verdrehung des Abschlusselements 20 zu detektieren. Der Lagesensor detektiert zu diesem Zweck eine Bewegung des Abschlusselements 20, z.B. in Form einer definierten Verdrehung, wie sie beim Öffnen des Abschlusselements 20 stattfindet.

Der zweite Sensor 7 ist als ein kapazitiver Wassersensor ausgebildet, der eine Annäherung von Wasser an eine Elektrode des zweiten Sensors 7 auf kapazitive Weise erfasst. Dabei umfasst der kapazitive Wassersensor zwei Elektroden, wobei eine Messung auf Luft oder Wasser durchgeführt wird. Erkannt wird, ob ein von der Elektrode des zweiten Sensors 7 beabstandetes Deckelelement 30 mit Luft oder wenigstens teilweise mit Wasser kontaktiert.

Vorteilhaft ist die Vorrichtung 100 in einer genormten Abdeckkapsel nach DIN 14318 oder einer genormten Blindkupplung nach DIN 14312 integrierbar. Dadurch kann vorteilhaft jeder Überflurhydranten gemäß EN 14384 mit der erfindungsgemäßen Überwachungsvorrichtung aus- bzw. nachgerüstet werden. Vorteilhaft kann die Vorrichtung 100 auch in eine Abdeckkapsel zum Verschließen einer Klauenkupplung eines Unterflurhydranten integriert werden.

Auf diese Weise können ganze Hydrantenparks auf einfache und kostengünstigste Weise mit der erfindungsgemäßen Vorrichtung ausgestattet werden. Vorzugweise ist vorgesehen, dass die Vorrichtung mit sämtlichen Komponenten in einem Abschlusselement 20 mit B-Durchmesser ("B-Deckkapsel") integrierbar ist. Auch auf diese Weise ist unterstützt, dass die Vorrichtung in sämtliche Hydranten integriert werden kann, weil in der Regel gängige Hydrantentypen wenigstens eine B-Abgangskupplung aufweisen, die mit einer B-Deckkapsel verschlossen wird. Ein Nachrüstaufwand des Hydranten mit der erfindungsgemäßen Vorrichtung kann daher vorteilhaft sehr gering gehalten werden.

Durch die vollständige Anordnung der Vorrichtung innerhalb des Abschlusselements 20 ist eine diskrete Überwachung des Hydranten unterstützt.

Vorteilhaft sind sämtliche Komponenten der Vorrichtung 100 d.h. Energieversorgungseinrichtung 5, elektronische Bauelemente samt Leiterplatte 3, Sensoren 6, 7, Mobilfunk-Modul 4 und Antenne 1 im Abschlusselement 20 angeordnet oder anordenbar. Vorteilhaft sind auf diese Weise eine gute Abstrahlcharakteristik der Antenne 1 und ein guter Schutz der gesamten Vorrichtung realisiert. Auf diese Weise ist es vorteilhaft möglich, einen Hydranten mit nur einer einzigen Vorrichtung auszurüsten und eine vollständige Überwachung zu ermöglichen. Dies wird dadurch erreicht, dass im Falle, dass das Abschlusselement (z.B. mittels eines Betätigungsschlüssels für Überflurhydranten gemäß ÖNORM F 2012) verdreht wird, der Lagesensor anspricht.

Im Falle, dass eine Inbetriebnahme des Hydranten durch eine Verdrehung eines Abschlusselements 20 ohne Vorrichtung 100 erfolgt, steigt in Folge der Inbetriebnahme der Wasserpegel im Inneren des Hydranten und der im nicht-verdrehten Abschlusselement 20 angeordnete zweite Sensor 7 der Vorrichtung 100 detektiert den steigenden Wasserpegel.

Im Ergebnis ist damit eine einfache und vollständige Überwachung des Hydranten betreffend Inbetriebnahme realisiert.

Durch die beiden technologisch unterschiedlichen Sensoren 6, 7 ist unterstützt, dass pro Hydrant jeweils nur eine einzige Vorrichtung 100 zum Überwachen des Hydranten erforderlich ist.

Im Falle einer Detektion einer Inbetriebnahme des Hydranten wird eine funkbasierte GSM-Nachricht an eine zentrale Verwaltungs - bzw. Kommunikationsvorrichtung (nicht in Figuren dargestellt) übermittelt, die z.B. einen Zeitpunkt der Inbetriebnahme und weitere technische Daten des Hydranten protokolliert.

Bei der Inbetriebnahme des Hydranten kann weiterhin vorgesehen sein, dass ein Testsignal an die zentrale Verwaltungseinrichtung abgesetzt wird, wobei eine Feldstärke des von der Signalisierungseinrichtung abgesetzten Funksignals erfasst wird.

Bei der Erstinstallation kann weiterhin vorgesehen sein, dass die Vorrichtung mittels eines externen Magneten und eines auf einer Platine des zweiten Sensors 7 angeordneten Reed-Schalters bzw. -kontakts 17 erstmalig in den aktiven Modus versetzt wird. Zu diesem Zweck wird der externe Magnet mit dem Reed-Schalter 17 berührungslos in Wechselwirkung gebracht, sodass der Reed-Schalter 17 eine Erstübertragung des funkbasierten Signals an die Verwaltungsvorrichtung auslöst.

Dadurch ist auf vorteilhafte Weise eine Schonung der Energieversorgungseinrichtung 5 unterstützt, weil der erste Sensor 6 beim Transport der Vorrichtung nicht in unerwünschter Weise jedesmal bei Erschütterungen auslöst und dadurch in unerwünschter Weise Übermittlungen von funkbasierten Nachrichten initiiert.

Vorteilhaft ist während der Inbetriebnahme eine Übertragung von aktueller Firmware von der Verwaltungsvorrichtung auf die Vorrichtung möglich. Auf diese Weise lässt sich die Firmware von elektronischen Komponenten der Vorrichtung 100 auf einfache Weise stets auf aktuellstem Stand halten.

Ferner kann vorteilhaft vorgesehen sein, dass die Vorrichtung 100 im Ruhezustand in regelmäßigen Abständen (z.B. monatlich) ein funkbasiertes Statussignal an die Verwaltungsvorrichtung übermittelt, mit dem z.B. ein Batteriestatus übermittelt wird, wodurch erkennbar ist, dass die Überwachungsvorrichtung noch in funktionsfähigem Zustand ist.

Vorteilhaft kann ferner vorgesehen sein, dass im Falle, dass eine Inbetriebnahme des Hydranten detektiert wurde, eine definierte Zeit (z.B. einige Minuten) abgewartet wird, bis die Vorrichtung 100 wieder sensitiv ist. Auf diese Weise kann vorteilhaft ein mehrmaliges Absetzen von funkbasierten Nachrichten während desselben Inbetriebnahmevorgangs des Hydranten und damit unnötiger elektrischer Energieverbrauch vermieden werden.

Die Energieversorgungseinrichtung 5 (z.B. eine Batterie) ist derart dimensioniert, dass sie die Vorrichtung 100 über einen definierten Mindestzeitraum mit elektrischer Energie versorgt bzw. für eine definierte Anzahl von funkbasierten Signalisierungen ausgelegt ist.

Im Ergebnis können dadurch vollständige Hydrantenparks auf einfache Weise effizient überwacht werden. Dies umfasst sowohl ein Erkennen von befugten als auch von unbefugten Inbetriebnahmen der Hydranten, wobei nach jeder Inbetriebnahme eine Kontrolle des Hydranten seitens der übergeordneten Stelle vorgenommen werden kann.

Eine nicht in Figuren dargestellte Ausführungsform sieht vor, dass auch Unterflurhydranten auf die oben erläuterte Art und Weise überwacht werden können, wobei in diesem Fall die erfindungsgemäße Vorrichtung 100 in einer vorzugsweise genormten Abdeckkappe zum Verschließen einer genormten Klauenkupplung des Unterflurhydranten angeordnet wird.

Fig. 2 zeigt eine vergrößerte Darstellung eines Abschnitts A von Fig. 1.

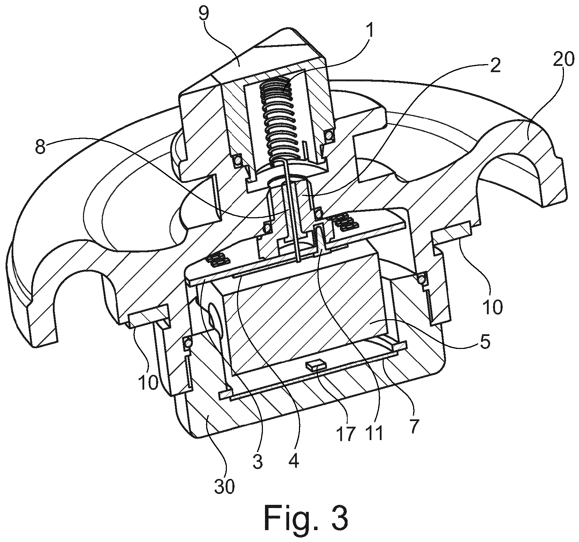

Fig. 3 zeigt eine perspektivische Querschnittsansicht durch ein vorgeschlagenes Abschlusselement 20 eines Hydranten, in welchem eine Vorrichtung 100 mit sämtlichen Komponenten angeordnet ist.

Man erkennt die Leiterplatte 3, auf der elektronische Bauteile und das Mobilfunk-Modul 4 angeordnet sind. Ferner ist auf der Leiterplatte 3 der erste Sensor 6 zur Erfassung der Drehung des Abschlusselements 20 angeordnet. Erkennbar ist eine elektrische Verbindungsleitung zur gewickelten Federantenne bzw. Helix-Antenne 1, wobei die elektrische Verbindungsleitung innerhalb eines Isolierelements 8 geführt ist.

Das Isolierelement 8 weist geeignete geometrische Abmessungen und einen geeigneten Ohm schen Widerstand auf, der geeignete elektrische Isoliereigenschaften zur elektrischen Isolierung der Antenne 1 vom Antennenmodul 2 bereitstellt. Vorzugsweise ist das Isolierelement 8 aus einem geeigneten Kunststoffmaterial gebildet, z.B. Polytetrafluorethylen (PTFE) und bildet auf diese Weise einen PTFE-Stutzen, der die Verbindungsleitung der Antenne 1 innerhalb des Antennenmoduls 2 zentriert bzw. stützt. Auf diese Weise realisiert das Isolierelement 8 zusammen mit dem vorzugsweise aus Messing ausgebildeten Antennenmodul 2 eine Abdichtung der Antenne 1 gegenüber der Umwelt, wodurch Betriebsbedingungen für die Antenne 1 vorteilhaft verbessert sind.

Auf einer Leiterplatte des zweiten Sensors 7 ist vorzugsweise an zentraler Position ein Reed-Schalter 17 angeordnet, der dazu verwendet wird, um bei einer berührungslosen Wechselwirkung mit einem externen Magneten (nicht dargestellt) kurz vor der Montage der Vorrichtung 100 in das Abschlusselement 20 die Vorrichtung 100 in den aktiven Modus zu versetzen. Bei diesem Ereignis wird eine erste Nachricht an die Verwaltungsvorrichtung drahtlos übermittelt.

Die Antenne 1 ist mittels eines Hüllelements 9 des Abschlusselements 20 geschützt, wobei das Hüllelement 9 vorzugsweise aus einem Kunststoffmaterial ausgebildet ist und mittels eines Schnappverschlusses im Aluminiummaterial des Abschlusselements 20 fixiert werden kann. Die Wicklung der Antenne 1 weist geeignete Steigungen auf, wodurch ein günstiges elektromagnetisches Abstrahlverhalten der Antenne 1 realisiert wird. Vorzugsweise weist die Helix-Antenne wenigstens zwei unterschiedliche Steigungen auf, wodurch eine Abstrahlung in wenigstens zwei Mobilfunk-Frequenzbereichen realisiert wird. Auf diese Weise wird eine Multiband-Fähigkeit für die Helix-Antenne realisiert, sodass sie in Mobilfunknetzen mehrerer Generationen (z.B. GSM, UMTS, LTE, usw.) agieren kann.

In einer nicht dargestellten Variante weist das Hüllelement 9 ein Innengewinde auf, mit dem es mit dem Antennenmodul 2 verschraubt werden kann.

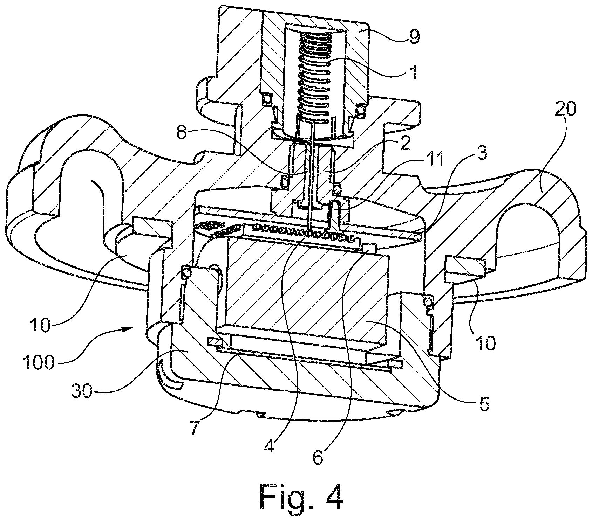

Fig. 4 zeigt die Anordnung von Fig. 3 in einer perspektivischen Schnittansicht von unten. Man erkennt das auf der Leiterplatte 3 angeordnete und mit dieser funktional verbundene Mobilfunk-Modul 4 sowie eines von wenigstens zwei Fixierelementen 11 (z.B. Schrauben), mit denen die Leiterplatte 3 am Antennenmodul 2 fixiert ist. Das Deckelelement 30 stellt nach dem Verschrauben mit dem Abschlusselement 20 eine Kaverne bereit, in der die gesamte Vorrichtung 100 zum Überwachen des Hydranten gut geschützt angeordnet ist.

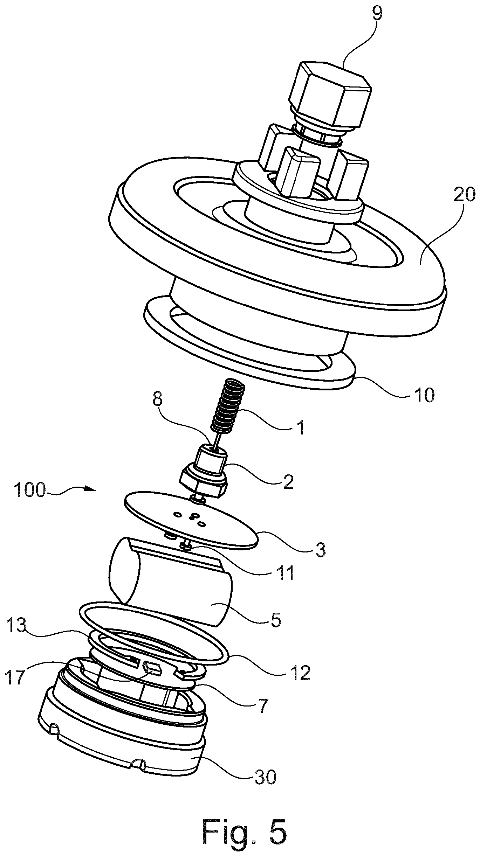

Fig. 5 zeigt eine Explosionsdarstellung der Vorrichtung 100. Der besseren Übersichtlichkeit halber sind das auf der Leiterplatte 3 angeordnete Mobilfunk-Modul 4 sowie weitere auf der Leiterplatte 3 angeordnete elektronische Bauteile nicht dargestellt. Erkennbar ist ein erstes Dichtelement 10, vorzugsweise in Form einer Flachdichtung zum Abdichten des Abschlusselements 20 mit der genormten Abgangskupplung (nicht dargestellt) . Erkennbar ist ferner ein zweites Dichtelement 12 (z.B. in Form eines O-Rings) zum Abdichten des Deckelements 30 mit dem Abschlusselement 20. Ein Sicherungselement 13, vorzugsweise in Form eines Sprengrings, dient zu einer Lagefixierung des zweiten Sensors 7.

Im verschraubten Zustand bildet das Abschlusselement 20 mit dem Deckelement 30 eine vorschriftsmäßig druckdichte Einheit, in der die Vorrichtung 100 zum Überwachen des Hydranten geschützt angeordnet ist. Man erkennt, dass das Hüllelement 9 aus Kunststoff in eine Auskragung des Abschlusselementes 20 eingesetzt werden kann, um auf diese Weise ein dreieckförmiges Angriffselement zum Ansetzen eines Betätigungsschlüssels zum Verdrehen des Abschlusselements 20 zu realisieren.

Der zweite Sensor 7 in Form einer Leiterplatte mit zwei gegenüberliegend angeordneten Elektrodenflächen ist unterhalb der Energieversorgungseinrichtung 5 angeordnet und detektiert einen Wassereintritt in den Hydranten ohne eine Kontaktierung zwischen Wasser und dem zweiten Sensor 7 kapazitiv durch das Deckelement 30. Dabei wird eine Annäherung von Wasser an den zweiten Sensor 7 aufgrund einer Inbetriebnahme des Hydranten detektiert.

Eine weitere, nicht in Figuren dargestellte Ausführungsform der Vorrichtung 100 sieht vor, dass sie eine vorzugsweise GPS-basierte Ortungseinrichtung aufweist. Mittels der Ortungseinrichtung kann eine Ortung des Hydranten (z.B. zum Zwecke der Inbetriebnahme oder Wartung der Vorrichtung 100) auf einfache Weise durchgeführt werden.

In einer weiteren nicht in Figuren dargestellten bevorzugten Ausführungsform der Vorrichtung 100 ist vorgesehen, dass die Signalisierungseinrichtung bei der Installierung eine Initialisierungsnachricht an die Verwaltungsvorrichtung absendet und auf diese Weise eine Signalstärke des von der Signalisierungseinrichtung abgesetzten Signals ermittelt werden kann.

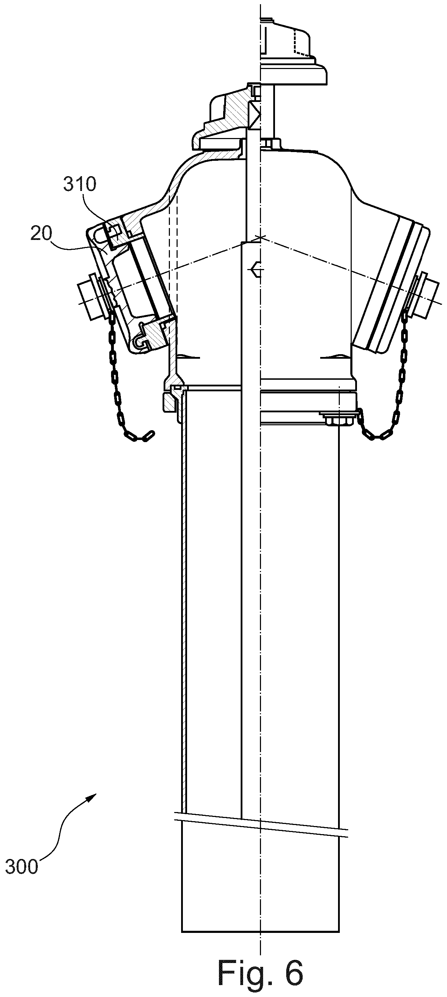

Fig. 6 zeigt in einem Aufriss eine Darstellung eines Hydranten 300 mit einer genormten Abgangskupplung 310 in Form einer genormten Festkupplung, die mit dem vorgeschlagenen Abschlusselement 20 verschlossen ist. Der besseren Übersichtlichkeit halber sind die Komponenten der Vorrichtung 100 innerhalb des Abschlusselements 20 nicht dargestellt.

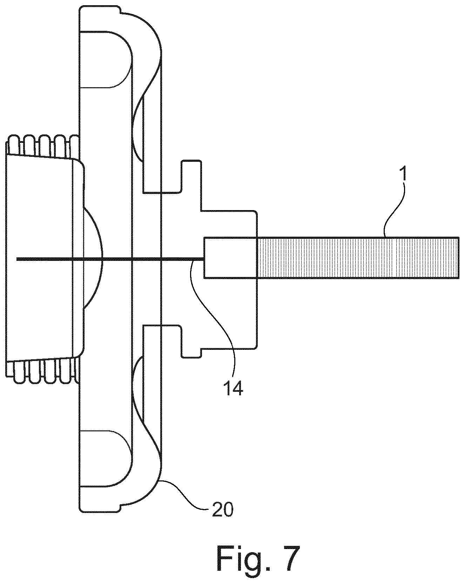

Nachfolgend werden anhand der Figuren 7 bis 10 mehrere alternative Antennenkonzepte für die Vorrichtung 100 kurz erläutert.

Fig. 7 zeigt in prinzipieller Weise eine als Stabantenne ausgebildete Antenne 1. Auf einfache Weise kann die Stabantenne in der verlängerten Achse des Abschlusselements 20 am Hüllelement 9 aufgesetzt werden. Vorteilhaft kann dadurch auf einfache Weise eine Antenne 1 mit guter Abstrahlcharakteristik realisiert werden.

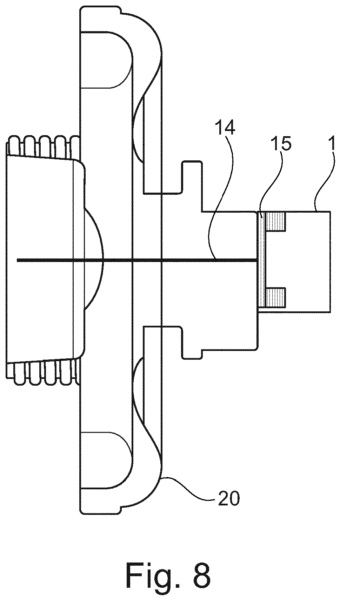

Fig. 8 zeigt schematisch eine weitere Antenne in Form eines vorgefertigten Antennenelements, das auf eine dünne, ca. 1 mm bis ca. 2 mm dicke Antennen-Leiterplatte 15 aufgelötet ist, wobei eine elektrische Anspeisung des Antennenelements durch eine dünne HF-Leitung 14 erfolgt. Auf diese Weise ist zur Realisierung der Antenne 1 lediglich ein geringer Eingriff in das genormte Abschlusselement 20 erforderlich, wobei lediglich eine Bohrung mit geringem Durchmesser für die HF-Leitung 14 erforderlich ist. Das Antennenelement 1 ist vorzugsweise mittels einer Vergussmasse umspritzt. Auf diese Weise wird eine integrierte SMD-Chip-Antenne realisiert.

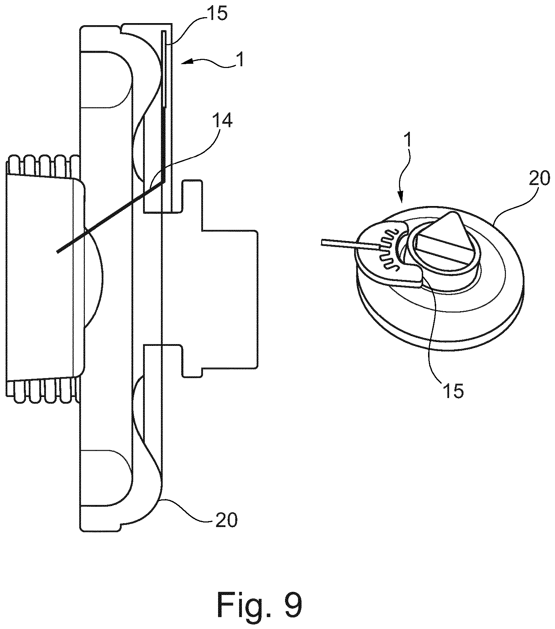

Fig. 9 zeigt eine weitere Variante eines Antennenelements mit einer hochfrequenten Anspeisung durch eine HF-Leitung 14. Im rechten Abschnitt von Fig. 8 ist das Antennenelement außen am Abschlusselement 20 angeordnet erkennbar. Im Ergebnis kann dadurch eine im Abschlusselement 20 angeordnete planare Antenne 1 realisiert werden.

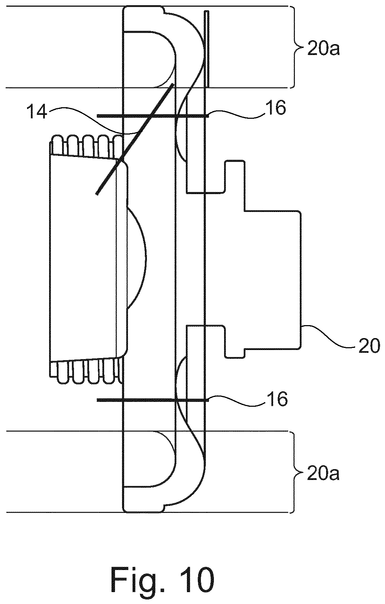

Fig. 10 zeigt eine prinzipielle Darstellung eines weiteren Antennenkonzepts, wobei das Abschlusselement 20 in diesem Fall wenigstens teilweise aus Kunststoffmaterial gefertigt ist. Die Antenne 1 kann z.B. als ein Metallstanzteil, ein Drahtgeflecht oder eine Antennen-Leiterplatte (nicht dargestellt) ausgebildet sein und innerhalb des Kunststoffmaterials platziert werden. Die Abstrahlung der Antenne 1 erfolgt durch das Kunststoffmaterial des Abschlusselements 20 hindurch. Auf diese Weise ist eine gute Abstrahlcharakteristik für die Antenne 1 realisierbar.

Angedeutet ist ein konzentrisch ausgebildeter Abschnitt 20a des Abschlusselements 20, die aus Kunststoffmaterial ausgebildet sind. Eine Dichtebene 16 deutet eine funktionale Trennung der Abschnitte 20a vom restlichen metallischen Abschlusselement 20 an. Vorteilhaft ist auch auf diese Weise eine Realisierung der Antenne 1 samt zugehöriger Elektronik auf einer Antennen-Leiterplatte 15 (nicht dargestellt) möglich.

Bei dieser Alternative kann vorgesehen sein, die mechanisch stark beanspruchten Teile (Rundgewinde, Betätigungsdreikant) aus Metall auszubilden. Der äußere Bereich 20a realisiert einen Schutzring für die Klauen der Festkupplung und schützt diese vor Verschmutzung.

Der elektrische Stromverbrauch der Vorrichtung 100 wird vorteilhaft derart dimensioniert, dass ein ordnungsgemäßer Betrieb der Vorrichtung 100 über einen definierten Zeitraum (z.B. wenigstens ca. acht Jahre) möglich ist und/oder derart, dass eine definierte Anzahl von Inbetriebnahmen des Hydranten detektiert und signalisiert werden kann. Dazu kann beispielsweise vorgesehen sein, dass bei einem Absinken unter einen definierten elektrischen Spannungsegel ein baldiges Austauschen der Energieversorgungseinrichtung 5 durchgeführt wird.

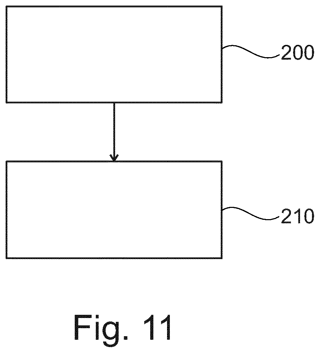

Fig. 11 zeigt ein prinzipielles Ablaufdiagramm eines Verfahrens zum Herstellen einer Vorrichtung zum Überwachen eines Hydranten.

In einem Schritt 200 wird ein Bereitstellen einer Detektionseinrichtung zum Detektieren einer Inbetriebnahme des Hydranten 300 durchgeführt.

In einem Schritt 210 wird ein Bereitstellen einer Signalisierungseinrichtung durchgeführt, wobei die Detektionseinrichtung und die Signalisierungseinrichtung derart ausgebildet werden, dass sie in einem Abschlusselement 20 zum Verschließen einer genormten Abgangskupplung 310 des Hydranten 300 anordenbar oder angeordnet sind, wobei für die Detektionseinrichtung zwei technisch unterschiedliche Sensoren 6, 7 bereitgestellt werden, wobei mit wenigstens einem der Sensoren 6, 7 eine Inbetriebnahme des Hydranten 300 detektierbar ist, wobei ein erster Sensor 6 als ein Lagesensor zum Erfassen einer definierten Verdrehung des Abschlusselements 20 und wobei ein zweiter Sensor 7 als ein Wassersensor zum Erfassen innerhalb des Hydranten 300 bereitgestellt wird, wobei der zweite Sensor 7 als ein kapazitiver Sensor bereitgestellt wird, der eine Annäherung von Wasser an eine Elektrode des zweiten Sensors 7 auf kapazitive Weise erfasst, wobei erkannt wird, ob ein von der Elektrode des zweiten Sensors 7 beabstandetes Deckelelement 3 mit Luft oder wenigstens teilweise mit Wasser kontaktiert.

Die Ausführung der beiden Schritte 200 und 210 ist dabei vorteilhaft vertauschbar.

Zusammenfassend wird mit der Erfindung eine elektronische Überwachungsvorrichtung für einen Hydranten vorgeschlagen, die ein effizientes und kostengünstiges Konzept zum Überwachen der Hydranten bereitstellt und geeignet ist, für eine Ausrüstung und/oder eine Nachrüstung von jeglichen Hydranten verwendet zu werden. Vorteilhaft können mit der vorgeschlagenen Überwachungsvorrichtung auch sehr alte Hydrantenparks kosteneffizient mit der Vorrichtung nachgerüstet werden und damit auf einfache Weise auf ein hohes Sicherheitsniveau gebracht werden. Eine lange und sichere Betriebsweise von Hydrantenparks ist auf diese Weise vorteilhaft unterstützt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Antenne
- 2: Antennenmodul
- 3: Leiterplatte
- 4: Mobilfunk-Modul
- 5: Batterie
- 6: 1. Sensor
- 7: 2. Sensor
- 8: Isolierelement
- 9: Hüllelement
- 10: 1. Dichtelement
- 11: Fixierelement
- 12: 2. Dichtelement
- 13: Sicherungselement
- 14: HF-Leitung
- 15: Antennen-Leiterplatte
- 16: Dichtebene
- 17: Reed-Schalter
- 20: Abschlusselement
- 20a: Abschnitt
- 30: Deckelelement
- 100: Vorrichtung
- 200...210: Verfahrensschritte
- 300: Hydrant
- 310: genormte Abgangskupplung
- A: Ausschnitt

## Patentansprüche

1. Vorrichtung (100) zum Überwachen eines Hydranten (300), aufweisend:
- eine Detektionseinrichtung zum Detektieren einer Inbetriebnahme des Hydranten (300); und
eine Signalisierungseinrichtung, mittels der die Inbetriebnahme des Hydranten (300) drahtlos signalisierbar ist, wobei die Detektionseinrichtung und die Signalisierungseinrichtung in einem Abschlusselement (20) des Hydranten (300) anordenbar oder angeordnet sind, wobei mittels des Abschlusselements (20) eine genormte Abgangskupplung (310) des Hydranten (300) verschließbar ist, wobei die Detektionseinrichtung zwei technisch unterschiedliche Sensoren (6, 7) aufweist, wobei mit wenigstens einem der Sensoren (6, 7) eine Inbetriebnahme des Hydranten (300) detektierbar ist, **dadurch gekennzeichnet, dass** ein erster Sensor (6) als ein Lagesensor zum Erfassen einer definierten Verdrehung des Abschlusselements (20) ausgebildet ist, wobei ein zweiter Sensor (7) als ein Wassersensor zum Erfassen von Wasser innerhalb des Hydranten (300) ausgebildet ist, wobei der zweite Sensor (7) als ein kapazitiver Sensor mit zwei Elektroden ausgebildet ist, der eine Annäherung von Wasser an eine Elektrode des zweiten Sensors (7) auf kapazitive Weise erfasst, wobei erkannt wird, ob ein von der Elektrode des zweiten Sensors (7) beabstandetes Deckelelement (30) mit Luft oder wenigstens teilweise mit Wasser kontaktiert.

2. Vorrichtung (100) nach Anspruch 1, **dadurch gekennzeichnet, dass** die Detektionseinrichtung und die Signalisierungseinrichtung in einem genormten Abschlusselement (20) des Hydranten anordenbar oder angeordnet sind.

3. Vorrichtung (100) nach Anspruch 2, **dadurch gekennzeichnet, dass** die Detektionseinrichtung und die Signalisierungseinrichtung in einem genormten Abschlusselement (20) mit B-Durchmesser des Hydranten (300) anordenbar oder angeordnet sind.

4. Vorrichtung (100) nach einem der vorhergehenden Ansprüche, **dadurch gekennzeichnet, dass** die Signalisierungseinrichtung ein Funkmodul (4) aufweist, mit dem eine funkbasierte Nachricht an eine Verwaltungsvorrichtung absetzbar ist.

5. Vorrichtung nach Anspruch 4, **dadurch gekennzeichnet, dass** für das Übertragen der funkbasierten Nachricht ein GSM-Netz und/oder ein UMTS-Netz verwendbar ist.

6. Vorrichtung (100) nach einem der vorhergehenden Ansprüche, **dadurch gekennzeichnet, dass** die Signalisierungseinrichtung eine Antenne (1) aufweist.

7. Vorrichtung (100) nach Anspruch 6, **dadurch gekennzeichnet, dass** die Antenne (1) als eine Helix-Antenne ausgebildet ist.

8. Vorrichtung nach Anspruch 7, **dadurch gekennzeichnet, dass** die Helix-Antenne multibandfähig ausgebildet ist.

9. Vorrichtung (100) nach einem der Ansprüche 6 bis 8, **dadurch gekennzeichnet, dass** die Antenne (1) als eine Stabantenne oder als eine PCB-Antenne oder als eine planare Antenne ausgebildet ist.

10. Vorrichtung (100) nach Anspruch **dadurch gekennzeichnet, dass** die planare Antenne als ein in einem Kunststoffteil des Abschlusselements (20) angeordnetes metallisches Element ausgebildet ist.

11. Vorrichtung (100) nach einem der vorhergehenden Ansprüche, **dadurch gekennzeichnet, dass** die Vorrichtung (100) eine Ortungseinrichtung aufweist.

12. Verfahren zum Herstellen einer Vorrichtung (100) zum Überwachen eines Hydranten (300), aufweisend die Schritte:
- Bereitstellen einer Detektionseinrichtung zum Detektieren einer Inbetriebnahme des Hydranten (300); und
- Bereitstellen einer Signalisierungseinrichtung, wobei die Detektionseinrichtung und die Signalisierungseinrichtung derart ausgebildet werden, dass sie in einem Abschlusselement (20) zum Verschließen einer genormten Abgangskupplung des Hydranten (300) anordenbar oder angeordnet sind, wobei für die Detektionseinrichtung zwei technisch unterschiedliche Sensoren (6, 7) bereitgestellt werden, wobei mit wenigstens einem der Sensoren (6, 7) eine Inbetriebnahme des Hydranten (300) detektierbar ist, wobei ein erster Sensor (6) als ein Lagesensor zum Erfassen einer definierten Verdrehung des Abschlusselements (20) und wobei ein zweiter Sensor (7) als ein Wassersensor zum Erfassen innerhalb des Hydranten (300) bereitgestellt wird, wobei der zweite Sensor (7) als ein kapazitiver Sensor mit zwei Elektroden bereitgestellt wird, der eine Annäherung von Wasser an eine Elektrode des zweiten Sensors (7) auf kapazitive Weise erfasst, wobei erkannt wird, ob ein von der Elektrode des zweiten Sensors (7) beabstandetes Deckelelement (30) mit Luft oder wenigstens teilweise mit Wasser kontaktiert.

13. Verfahren zum Überwachen eines Hydranten (300), aufweisend die Schritte:
- Detektieren einer Inbetriebnahme des Hydranten (300) mittels einer Detektionseinrichtung, die in einem Abschlusselement (20) zum Verschließen einer genormten Abgangskupplung (310) des Hydranten (300) angeordnet ist, wobei zum Detektieren zwei technisch unterschiedliche Sensoren (6, 7) verwendet werden, wobei mit wenigstens einem der Sensoren (6, 7) eine Inbetriebnahme des Hydranten (300) detektierbar ist, wobei ein erster Sensor (6) als ein Lagesensor zum Erfassen einer definierten Verdrehung des Abschlusselements (20) und wobei ein zweiter Sensor (7) als ein Wassersensor zum Erfassen innerhalb des Hydranten (300) ausgebildet ist, wobei der zweite Sensor (7) als ein kapazitiver Sensor mit zwei Elektroden ausgebildet ist, der eine Annäherung von Wasser an eine Elektrode des zweiten Sensors (7) auf kapazitive Weise erfasst, wobei erkannt wird, ob ein von der Elektrode des zweiten Sensors (7) beabstandetes Deckelelement (30) mit Luft oder wenigstens teilweise mit Wasser kontaktiert; und
- Drahtloses Signalisieren der Inbetriebnahme des Hydranten (300) mittels einer im Abschlusselement (20) des Hydranten (300) angeordneten Signalisierungseinrichtung.

14. Verfahren nach Anspruch 13, ferner aufweisend den Schritt:
- Übermitteln eines Testsignals der Signalisierungseinrichtung an eine Kommunikationsvorrichtung während einer Erstinbetriebnahme des Hydranten (300).

15. Verfahren nach Anspruch 13 oder 14, wobei mittels einer Ortungseinrichtung des Hydranten (300) eine Lokalisierung des Hydranten (300) durchgeführt wird.

## Claims

1. A device (100) for monitoring a hydrant (300), comprising:
- a detection device for detecting commissioning of the hydrant (300); and
- a signaling device by means of which commissioning of the hydrant (300) can be signaled wirelessly, wherein the detection device and the signaling device can be arranged or are arranged in a terminating element (20) of the hydrant (300), wherein, by means of the terminating element (20), a standardized output coupling (310) of the hydrant (300) can be closed, wherein the detection device comprises two technically different sensors (6, 7), wherein with at least one of the sensors (6, 7) commissioning of the hydrant (300) can be detected,
**characterized in that**
a first sensor (6) is formed as a position sensor for detecting a defined twist of the terminating element (20), wherein a second sensor (7) is formed as a water sensor for detecting water within the hydrant (300), wherein the second sensor (7) is formed as a capacitive sensor with two electrodes, which detects an approach of water to an electrode of the second sensor (7) in a capacitive manner, wherein it is detected as to whether a cover element (30) spaced apart from the electrode of the second sensor (7) contacts air or contacts water at least partly.

2. The device (100) according to claim 1, **characterized in that** the detection device and the signaling device can be arranged or are arranged in a standardized terminating element (20) of the hydrant (300).

3. The device (100) according to claim 2, **characterized in that** the detection device and the signaling device can be arranged or are arranged in a standardized terminating element (20) with B-diameter of the hydrant (300).

4. The device (100) according to any one of the preceding claims, **characterized in that** the signaling device comprises a radio module (4) by means of which a radio-based message can be sent to a management device.

5. The device according to claim 4,
**characterized in that** a GSM network and/or an UMTS network can be used for transmission of the radio-based message.

6. The device (100) according to any one of the preceding claims, **characterized in that** the signaling device comprises an antenna (1).

7. The device (100) according to claim 6, **characterized in that** the antenna (1) is formed as a helix antenna.

8. The device (100) according to claim 7, **characterized in that** the helix antenna is formed as a multiband capable antenna.

9. The device (100) according to any one of claims 6 to 8, **characterized in that** the antenna (1) is formed as a rod antenna or as a PCB antenna or as a planar antenna.

10. The device (100) according to claim 9, **characterized in that** the planar antenna is formed as a metallic element arranged in a plastic part of the terminating element (20).

11. The device (100) according to any one of the preceding claims, **characterized in that** the device (100) comprises a locating device.

12. A method for manufacturing a device (100) for monitoring a hydrant (300) comprising the steps:
- providing a detection device for detecting commissioning of the hydrant (300); and
- providing a signaling device, wherein the detection device and the signaling device are formed such they can be arranged or are arranged in a terminating element (20) for closing a standardized output coupling of the hydrant (300), wherein two technically different sensors (6, 7) are provided for the detection device, wherein commissioning of the hydrant (300) can be detected with at least one of the sensors (6, 7), wherein a first sensor (6) is provided as a position sensor for detecting a defined twist of the terminating element (20) and wherein a second sensor (7) is provided as a water sensor for detecting water within the hydrant (300), wherein the second sensor (7) is provided as a capacitive sensor with two electrodes, which is detecting an approach of water to an electrode of the second sensor (7) in a capacitive manner, wherein it is detected as to whether a cover element (30) spaced apart from the electrode of the second sensor (7) contacts air or contacts water at least partly.

13. The method for monitoring a hydrant (300) comprising the steps:
- detecting commissioning of the hydrant (300) by means of a detection device which is arranged in a terminating element (20) for closing a standardized output coupling (310) of the hydrant (300), wherein two technically different sensors (6, 7) are used for detection, wherein commissioning of the hydrant (300) can be detected with at least one of the sensors (6, 7), wherein a first sensor (6) is formed as a position sensor for detecting a defined twist of the terminating element (20) and wherein a second sensor (7) is formed as a water sensor for detecting water within the hydrant (300), wherein the second sensor (7) is formed as a capacitive sensor with two electrodes, which is detecting an approach of water to an electrode of the second sensor (7) in a capacitive manner, wherein it is detected as to whether a cover element (30) spaced apart from the electrode of the second sensor (7) contacts air or contacts water at least partly, and
- wireless signaling of commissioning of the hydrant (300) by means of a signaling device arranged in the terminating element (20) of the hydrant (300).

14. The method according to claim 13, furthermore comprising the step:
- transmitting a test signal of the signaling device to a communication device during initial commissioning of the hydrant (300).

15. The method according to claim 13 or 14, wherein localization of the hydrant (300) is carried out by means of a locating device of the hydrant (300).

## Revendications

1. Dispositif (100) de surveillance d'une bouche d'incendie (300) comportant:
- un dispositif de détection pour détecter une mise en service de la bouche d'incendie (300); et
- un dispositif de signalisation par l'intermédiaire duquel la mise en service de la bouche d'incendie (300) peut être signalée sans fil, dans lequel le dispositif de détection et le dispositif de signalisation peuvent être agencé ou sont agencés dans un élément terminal (20) de la bouche d'incendie (300), dans lequel un accouplement de sortie standardisé (310) de la bouche d'incendie (300) peut être fermé par l'intermédiaire de élément terminal (20), dans lequel le dispositif de détection comporte deux capteurs techniquement différents, dans lequel une mise en service de la bouche d'incendie (300) peut être détectée avec au moins un des capteurs, **caractérisé en ce qu'**un premier capteur (6) est formé en tant que capteur de position pour détecter une torsion définie de l'élément terminal (20), dans lequel un deuxième capteur (7) est formé en tant que capteur d'eau pour détecter de l'eau dans la bouche d'incendie (300), dans lequel le deuxième capteur (7) est formé en tant que capteur capacitif avec deux électrodes qui détecte de manière capacitive une approche de l'eau à une électrode du deuxième capteur (7), dans lequel il est détecté si un élément de couvercle (30) espacée de l'électrode du deuxième capteur (7) contacte de l'air ou au moins partiellement de l'eau.

2. Dispositif (100) selon la revendication 1, **caractérisé en ce que** le dispositif de détection et le dispositif de signalisation peuvent être agencé ou sont agencés dans un élément terminal standardisé (20) de la bouche d'incendie (300).

3. Dispositif (100) selon la revendication 2, **caractérisé en ce que** le dispositif de détection et le dispositif de signalisation peuvent être agencé ou sont agencés dans un élément terminal standardisé (20) avec diamètre B de la bouche d'incendie (300).

4. Dispositif (100) selon l'une quelconque des revendications précédentes, **caractérisé en ce que** le dispositif de signalisation comporte un module radio (4) par lequel un message sans fil peut être envoyé à un dispositif de gestion.

5. Dispositif (100) selon la revendication 4, **caractérisé en ce qu'**un réseau GSM et/ou un réseau UMTS peut être utilisé pour la transmission du message sans fil.

6. Dispositif (100) selon l'une quelconque des revendications précédentes, **caractérisé en ce que** le dispositif de signalisation comporte une antenne (1).

7. Dispositif (100) selon la revendication 6, **caractérisé en ce que** l'antenne (1) est formée en tant qu'antenne (1) hélice.

8. Dispositif (100) selon la revendication 7, **caractérisé en ce que** l'antenne (1) hélice est formée capable à multibande.

9. Dispositif (100) selon l'une quelconque des revendications 6 à 8, **caractérisé en ce que** l'antenne (1) est formée en tant qu'antenne à tige ou en tant qu'antenne PCB ou en tant qu'antenne planaire.

10. Dispositif (100) selon la revendication 9, **caractérisé en ce que** l'antenne planaire est formée en tant qu'un élément métallique agencé dans une pièce en matière plastique de l'élément terminal (20).

11. Dispositif (100) selon l'une quelconque des revendications précédentes, **caractérisé en ce que** le dispositif (100) comporte un dispositif de localisation.

12. Procédé de fabrication d'un dispositif (100) de surveillance d'une bouche d'incendie (300) comportant les étapes:
- la fourniture d'un dispositif de détection pour détecter une mise en service de la bouche d'incendie (300); et
- la fourniture d'un dispositif de signalisation, dans lequel le dispositif de détection et le dispositif de signalisation sont formés de telle sorte qu'ils peuvent être agencés ou sont agencés dans un élément terminal (20) pour fermer un accouplement de sortie standardisé d'une bouche d'incendie (300), dans lequel deux capteurs (6, 7) techniquement différents sont fournis pour le dispositif de détection, dans lequel une mise en service de la bouche d'incendie (300) peut être détectée par l'intermédiaire de l'au moins un des capteurs (6, 7), dans lequel un premier capteur (6) est fourni en tant que capteur de position pour détecter une torsion définie de l'élément terminal (20) et dans lequel un deuxième capteur (7) est fourni en tant que capteur d'eau pour détecter de l'eau dans la bouche d'incendie (300), dans lequel le deuxième capteur (7) est fourni en tant que capteur capacitif avec deux électrodes qui détecte de manière capacitive une approche de l'eau à une électrode du deuxième capteur (7), dans lequel il est détecté si un élément de couvercle (30) espacé de l'électrode du deuxième capteur (7) contacte de l'air ou au moins partiellement de l'eau.

13. Procédé de surveillance d'une bouche d'incendie (300) comportant les étapes:
- la détection d'une mise en service de la bouche d'incendie (300) par l'intermédiaire d'un dispositif de détection qui est agencé dans un élément terminal (20) pour fermer un accouplement de sortie standardisé (310) de la bouche d'incendie (300), dans lequel deux capteurs (6, 7) techniquement différents sont utilisés pour la détection, dans lequel une mise en service de la bouche d'incendie (300) peut être détectée par l'intermédiaire de l'au moins un des capteurs (6, 7), dans lequel un premier capteur (6) est formé en tant que capteur de position pour détecter une torsion définie de l'élément terminal (20) et dans lequel un deuxième capteur (7) est formé en tant que capteur d'eau pour détecter de l'eau dans la bouche d'incendie (300), dans lequel le deuxième capteur (7) est formé en tant que capteur capacitif avec deux électrodes qui détecte de manière capacitive une approche de l'eau à une électrode du deuxième capteur (7), dans lequel il est détecté si un élément de couvercle (30) espacé de l'électrode du deuxième capteur (7) contacte de l'air ou au moins partiellement de l'eau, et
- la signalisation sans fil de la mise en service de la bouche d'incendie (300) par l'intermédiaire d'un dispositif de signalisation agencé dans l'élément terminal (20).

14. Procédé selon la revendication 13, comportant en outre l'étape:
- la transmission d'un signal d'essai de la dispositif de signalisation à un dispositif de communication pendant une première mise en service de la bouche d'incendie (300).

15. Procédé selon la revendication 13 ou 14, dans lequel une localisation de la bouche d'incendie (300) est réalisée par l'intermédiaire d'un dispositif de localisation de la bouche d'incendie (300).
